# EUROPEAN PATENT SPECIFICATION

(11) **EP 0 757 626 B1**
(45) Date of publication and mention of the grant of the patent: **09.09.1998**
(21) Application number: 95916320.5
(22) Date of filing: 07.04.1995
(51) Int. Cl.: B32B 31/06, B05C 1/14

(54) **LAMINATION PROCESS FOR COATINGS**
VERFAHREN ZUM LAMINIEREN VON BESCHICHTUNGEN
PROCEDE DE STRATIFICATION POUR REVETEMENTS

(30) Priority: 29.04.1994 US 235366
(43) Date of publication of application: 12.02.1997
(73) Proprietor: MINNESOTA MINING AND MANUFACTURING COMPANY, St. Paul, Minnesota 55133-3427 (US)
(72) Inventor: VESLEY, George, F., Saint Paul, MN 55133-3427 (US); LEONARD, William, K., Saint Paul, MN 55133-3427 (US); WILLIE, Bradley, R., Saint Paul, MN 55133-3427 (US)
(74) Representative: Warcoin, Jacques
(86) International application number: US9504470
(87) International publication number: WO9529811

(56) References cited:
- EP-A- 0 027 543
- EP-A- 0 236 616
- EP-A- 0 616 880
- US-A- 2 667 436
- US-A- 5 021 188
- DATABASE WPI Week 9324 Derwent Publications Ltd., London, GB; AN 93-191679 & JP,A,05 117 532 (TOSHIBA KK) , 14 May 1993

## Description

### Background of the Invention

### Field of the Invention

This invention relates to preparing laminates in which a coating is sandwiched between two substrates.

### Description of the Related Art

Laminated structures in which a polymerizable coating is sandwiched between two substrates are known. It is desirable to maintain the thickness of a coating laid down on the substrates during lamination. It is further desirable to avoid air entrainment during lamination; such entrainment causes bubbles to develop in the laminate structure. In addition, during construction of multi-layer structures, it is desirable to minimize inter-layer mixing.

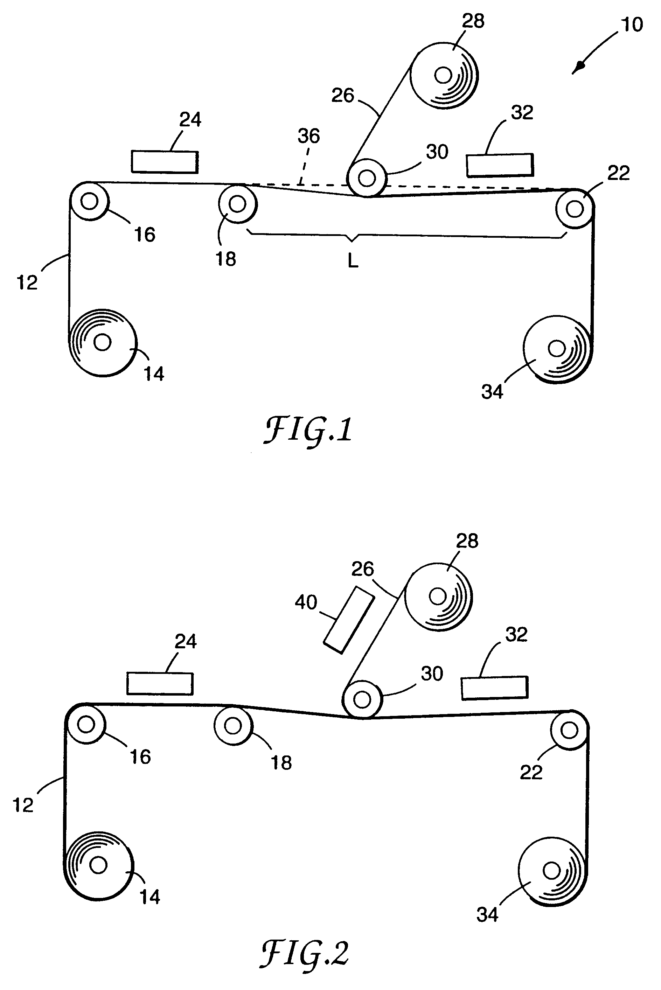

The document EP-A-236 616 relates to a method for coating non-woven and other porous web with controlled or negligible penetration into the pores by subjecting a coating carried by a surface to electron beam radiation before laminating the web to the surface carrying the coating and with a radiation dose that only partially cures the coating into a soft or tacky state such that the laminating will effect surface spreading adhesion to the web with controlled or substantially no penetration into the pores, and thereafter subjecting the laminated web and partially cured coating to greater electron beam radiation fully to cure the coating, lamination takes place between two rollers (see fig. 1). Therefore the web is not unsupported throughout the lamination zone.

### Summary of the Invention

In general, the invention features a method of preparing a laminate that includes introducing a first substrate having first and second surfaces and supported at two or more points into a lamination zone located between two of the support points. The first substrate is unsupported throughout the lamination zone. A second substrate, also having first and second surfaces, is introduced into the lamination zone as well. The second substrate passes around a lamination bar to position the first surfaces of the two substrates in a facing relationship with each other. At least one of the first surfaces is provided with a coating. The lamination bar is depressed to laminate the second substrate to the first substrate.

In preferred embodiments, the thickness of each of the substrates is no greater than about 0,64 mm (25 mils). The total thickness of the coating preferably ranges from about 0.00635 mm (0.25 mils) to about 6.35 mm (250 mils). One or both of the substrates play be provided in the form of a endless belt. Following coating, the substrate which is in the form of a endless belt can be delaminated and re-used. Moreover, a first surface of each substrate may be provided with a coating.

The lamination bar may be a solid bar or a hollow tube. In the case of the latter, the tube may be an air-pressurized lamination tube adapted to create a cushion of air between the second substrate and the tube. The lamination bar is preferably adjusted to depress the first substrate generally in the range of 0.25 to 12.7 mm (10 to 500 mils), preferably 0.64 to 6.35 mm (25 to 250 mils), and more preferably 1.27 to 3.8 mm (50-150 mils), relative to the plane defined by the first substrate and the two support points.

In the invention, the coating applied to at least one of the first surfaces is polymerizable. In other preferred embodiments, the coating is substantially solvent-free (i.e., at least about 80% solids) and is more preferably essentially solvent-free. In certain most preferred embodiments, the coating is polymerizable and solvent-free.

Examples of preferred polymerizable coatings include (a) a mixture of liquid crystal and polymerizable matrix reactants which upon polymerization yields a polymer dispersed liquid crystal film and (b) reactants which upon polymerization yield an adhesive, e.g., a pressure sensitive adhesive.

The invention allows gentle placement of a substrate onto the coated surface of another substrate, thereby minimizing air entrainment at the point of lamination and thus minimizing bubble or pinhole formation. The invention thus provides laminates having a uniform polymerizable coating sandwiched between two thin flexible substrates (one or both of which may be subsequently removed). The thickness of the coating (which is established prior to lamination when the coating is applied to one or both of the substrates) is not disturbed during the lamination process. The invention is particularly useful in the preparation of optical quality films such as polymer dispersed liquid crystal films in which the optical properties of the device are sensitive to irregularities such as thickness variations in the optically responsive film. The invention is also useful in the preparation of various adhesive constructions, e.g., optical adhesives, transfer tapes, foam-like adhesives, and cellular pressure sensitive adhesive membranes, as well as heat-activated films, vibration damping materials, protective coatings, and thin films. The invention is useful as well in the preparation of "wet-on-wet" constructions involving application of two or more polymerizable coatings because inter-layer mixing is minimized.

Other features and advantages of the invention will be apparent from the following description of the preferred embodiments thereof, and from the claims.

### Brief Description of the Drawings

The invention will be more fully understood with reference to the following drawings in which:
Fig. 1 is a schematic drawing showing steps in the lamination process according to the invention.
Fig. 2 is a schematic drawing showing steps in the lamination process according to the invention, including multiple coating operations.
Fig. 3 is a schematic drawing showing steps in the lamination process according to the invention, including multiple lamination operations.
Fig. 4 is a schematic drawing showing steps in the lamination process according to the invention in which one of the substrates is provided in the form of a endless belt.
Fig. 5 is a cross-sectional view of an extrusion die useful in preparing laminates according to the invention.
Fig. 6 is an enlarged cross-sectional view of the die of Fig. 5.
Fig. 7 is a cross-sectional view of an alternative configuration for a die useful in preparing laminates according to the invention.

### Description of the Preferred Embodiments

Referring to Fig. 1, there is shown a lamination apparatus 10 for preparing laminates in which, for example, an essentially solvent-free (i.e., 100% solids) polymerizable coating is sandwiched between two flexible substrates 12, 26. As shown in Fig. 1, a first thin flexible substrate 12 (typically having a thickness no greater than about 0.64 mm (25 mils)) is dispensed from an unwind roll 14. Examples of suitable materials for substrate 12 include polymeric films such as polyesters (e.g., polyethylene terephthalate), polyethersulfones, polyimides, and polycarbonates. In the case of devices for optical applications (e.g., light modulating devices), substrate 12 preferably is transparent. Substrate 12 may also include an electrically conductive material, e.g., chromium, indium tin oxide, tin oxide, stainless steel, gold, silver, copper, aluminum, titanium, cadmium stannate, transition metal oxides, and mixtures and alloys thereof, to enable substrate 12 to function as an electrode.

Substrate 12 is supported, for example, by a series of three intermediate rolls 16, 18, and 22. Roll 18 may be a driven backup if a die coating method is used while roll 22 may be an idler roll. The area between rolls 18 and 22 defines a lamination zone L. Substrate 12 is unsupported throughout the lamination zone.

Before entering the lamination zone, substrate 12 is provided with an essentially solvent-free polymerizable coating which is deposited at a coating station 24. Any type of polymerizable coating may be deposited. Examples include mixtures of liquid crystal and polymerizable matrix reactants which, upon exposure to ultraviolet radiation, polymerize to form an optically responsive Polymer Dispersed Liquid Crystal (PDLC) film in which liquid crystal is dispersed throughout a polymer matrix. Examples of suitable matrix reactants include mono-functional (i.e., having one polymerizable group) and multi-functional (i.e., having two or more polymerizable groups) reactants such as mono- and multi-functional enes (i.e., an "ene" is a reactant having a polymeizable carbon-carbon double bond; e.g., acrylates, methacrylates, acrylamides, methacrylamides, vinyl silanes, allyls, and vinyl ethers); thiols; silicon hydrides; alcohols; epoxies; isocyanates; amines; and/or combinations thereof.

Also suitable are reactants which upon polymerization yield adhesives, e.g., pressure sensitive adhesives, foam-like adhesives, and cellular pressure sensitive adhesive membranes. The reactants may be thermally or radiation cured. Examples include alkyl acrylates and methacrylates, epoxies, isocyanates, and combinations thereof.

Also suitable are reactants which upon polymerization yield films or protective coatings (e.g., acrylates, epoxies, vinyl ethers, and combinations thereof), as well as reactants that yield vibration damping materials (e.g., acrylates). The reactants may be thermally or radiation cured.

The polymerizable coating may be deposited on substrate 12 at coating station 24 by a wide variety of coating techniques. Examples include knife coating, reverse roll coating, notched bar coating, gravure coating, slide coating, curtain coating, spray coating, extrusion coating, and other conventional coating techniques. Where caliper control of the polymerizable coating is important (e.g., in the preparation of optical quality films), a precision coating die may be used such as described in Vesley et al., PCT/US International application No. 95/04466, entitled "Precision Coating Process for Preparing Polymerizable Films" filed concurrently with, and assigned to the same assignee as, the present application.

Once substrate 12 has been coated with the polymerizable coating, it is transported from coating station 24 into the lamination zone located between idler rolls 18 and 22. A second substrate 26 (which may be the same material as substrate 12) is dispensed from an unwind roll 28 into the lamination zone as well. Substrate 26 passes around a lamination bar 30, causing the direction of the moving substrate to change.

Lamination bar 30 is preferably an air-pressurized, sintered metal, hollow tube typically measuring 2.54 - 10.16 cm (1-4 inches) in diameter; the air pressure delivered to bar 30 (typically about 1.4 - 4.5 bar) allows substrate 26 to ride on a cushion of air as it passes around lamination bar 30. Lamination bar 30 may also be in the form of a hollow tube provided with slots or holes; such tubes are particularly useful in the case of substrates requiring relatively large turning radii. Bar 30 may also be in the form of an idler roll (which may be solid or hollow), or in the form of a solid or hollow cylinder that serves as a turning point for the substrate. Preferably, bar 30 is close to roll 18.

Lamination is accomplished by mechanically depressing bar 30, thereby causing deflection of substrate 12 below the plane indicated by dotted line 36 that it would normally follow as it passed between 5 rolls 18 and 22. The extent of deflection is referred to as "interference." The interference is generally in the range of 0.25 to 12.7 mm (10 to 500 mils), preferably 0.64 to 6.35 mm (25 to 250 mils), and more preferably 1.27 to 3.8 mm (50-150 mils). The particular value for the interference is chosen based upon the viscosity and fluid properties of the polymerizable coating, web speed, and caliper of the substrate. If the interference is not sufficiently high, air entrainment may occur, resulting in pinhole formation in the polymerized coating. On the other hand, excessive interference can cause spreading of the polymerizable coating, thereby reducing coating thickness.

Following lamination, the resulting unpolymerized sandwich is transported to a reaction station 32 where it is exposed, e.g., to heat, ultraviolet radiation, visible radiation, or a combination thereof, as is well-known in the art, to polymerize the coating. Reaction station 32 preferably is located in close proximity to the coating zone and may encompass idler roll 22. Preferably, the coating should be at least partially polymerized before reaching roll 22 to prevent disturbing the caliper of the coating. The resulting laminate may then be wound onto take-up roll 34.

Referring to Fig. 2, multiple coatings may be applied using several coating stations 24 and 40 ; additional coating stations may be included as well. The advantage of the present lamination in applying multiple coatings is that inter-layer mixing of the uncured coatings is minimized.

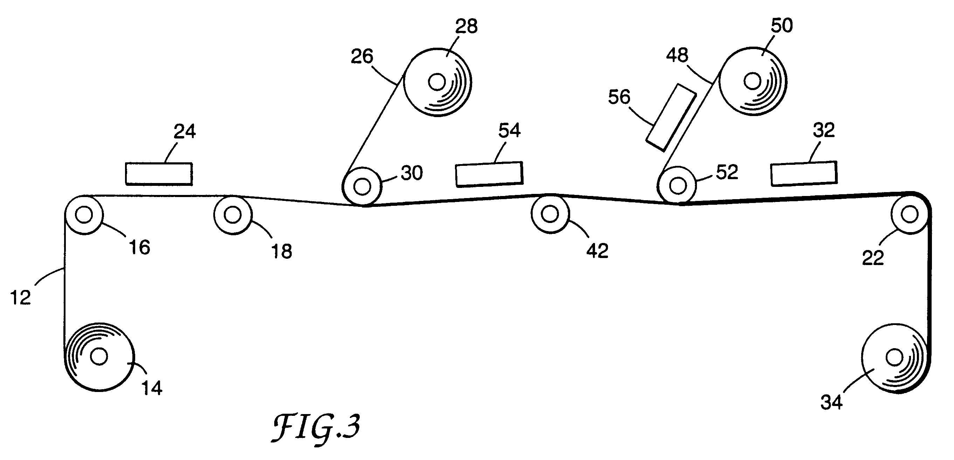

Referring to Fig. 3, more than two substrates may be laminated together through the inclusion of multiple lamination zones. As shown in Fig. 3, the laminate formed from substrates 12 and 26 is passed to a reaction station 54 to polymerize the polymerizable coating; alternatively, reaction station 54 may be eliminated and a single reaction station 32 used to polymerize all coatings. Next, a third substrate 48 dispensed from an unwind roll 50 is provided with a polymerizable coating at coating station 56 and then laminated to substrate 26 in the lamination zone defined by idler rolls 42 and 22 by means of lamination roll 52. The multiple lamination zone embodiment shown in Fig. 3 may be combined with multiple coating stations (as shown in Fig. 2) as well.

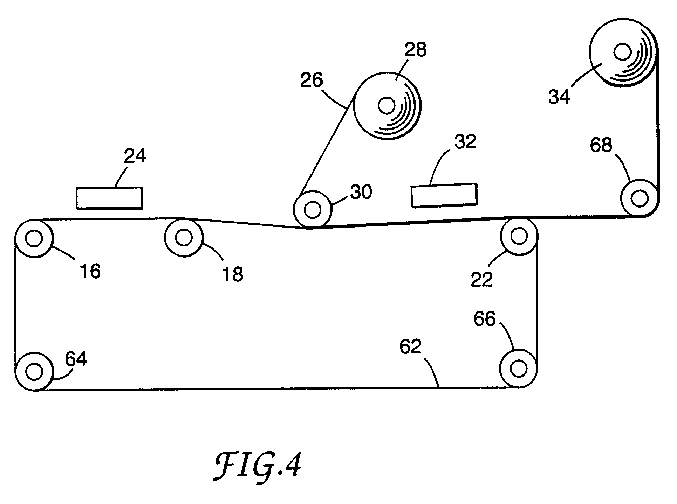

It may be desirable for one or both of the substrates to be removable. In one embodiment, the removable substrate may be dispensed in the form of a endless belt as shown in Fig. 4. The lamination apparatus 60 shown in Fig. 4 is identical to the apparatus shown in Fig. 1 except that first substrate 62 is provided in the form of a endless belt supported by idler rolls 16, 18, 22, 64 and 66. The coatable surface of substrate 62 may be provided with a release coating if desired. Following lamination and polymerization of the coating, substrate 62 is delaminated from substrate 26 and then re-used in the lamination process. Substrate 26 (which now contains the polymerized coating is then passed around idler roll 68 and wound onto take-up roll 34. Multiple coating stations and/or lamination zones may be used in conjunction with the continuous belt embodiment as well.

It is understood that alternative arrangements of support rolls and the lamination bar other than those illustrated above fail within the scope of this invention. For example, configurations with the support rolls positioned above the substrate and the lamination bar positioned below the substrate or the support rolls positioned on one side of a vertical substrate and the lamination bar positioned on the opposite side of the substrate will exhibit comparable performance to the configurations described above.

The invention will be more fully understood with references to the following examples which are not to be construed as limiting the scope of the invention.

### EXAMPLES

In all of the Examples, coating was carried out by pumping an unpolymerized fluid of polymerizable reactant(s) (and additives such as liquid crystal, if present) to a coating die through which the fluid was extruded onto the electrode side of a substrate according to the process described in greater detail in said PCT/US International application No. 95/04466 entitled "Precision Coating a Process for Preparing Polymerizable Films", filed concurrently herewith and assigned to the assignee of this application. The electrode side of the substrate is the side containing the electrode (such that the polymerizable composition is applied to the electrode).

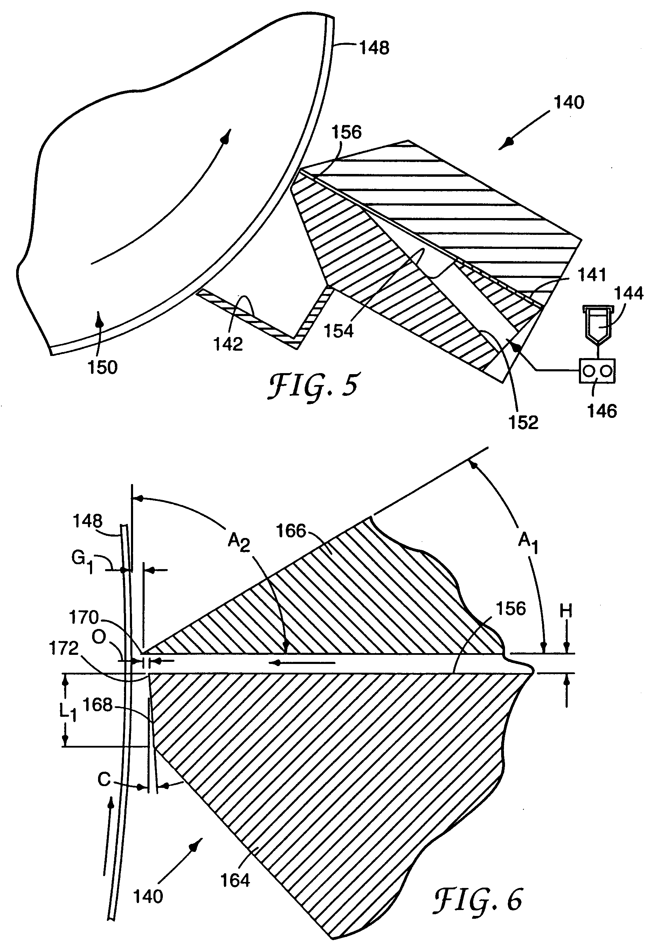

The coating die 140 is shown in Figure 5. The unpolymerized fluid 144 was supplied by a pump 146 to the die 140 for application in the form of a continuous coating bead to the moving substrate 148, supported by a backup roll 150. Where indicated in the examples, vacuum chamber 142 applied vacuum upstream of the bead to stabilize the coating bead. The unpolymerized fluid 144 was supplied through a channel 152 to a manifold 154 for distribution through a slot 156 and coating onto the moving substrate 148. The height of slot 156 was controlled by means of a U-shaped shim 141 (typically made of brass or stainless steel).

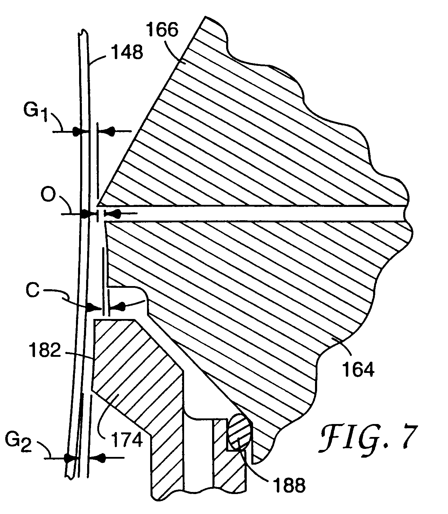

Referring to Figure 6, die 140 consisted of an upstream bar 164 and a downstream bar 166. The lip of the upstream bar was formed as a curved land 168 and the lip of the downstream bar was formed as a substantially straight sharp edge 170 having an edge radius no greater than 10 µm. The radius of the curved land 168 was equal to the radius of the backup roll 150 plus a minimal, and non-critical, 0.13 mm allowance for coating gap and film thickness.

The length L₁ of the curved land 168 on the upstream bar 164 was 12.7 mm. The edge angle A₁ of the downstream bar 166 is 30-60; more preferably 50-60°. The die attack angle A₂ between the downstream bar 166 surface of the coating slot 156 and the tangent plane P through a line on the film 148 surface parallel to, and directly opposite, the sharp edge 170 was either 90 or 95°.

The coating gap G₁ is the distance between the sharp edge 170 and the film 148. Slot height H is the distance between upstream bar 164 and downstream bar 166, and was controlled by controlling the thickness of shim 141. The slot height used in the examples was 152 µm. Overbite O is a positioning of the sharp edge 170 of the downstream bar 166, with respect to the downstream edge 172 of the curved land 168 on the upstream bar 164, in a direction toward the film 148. Convergence C is a counterclockwise, as shown in Fig. 6, positioning of the curved land 168 away from a location parallel to the film 148, with the downstream edge 172 being the center of rotation. In the examples, convergence was 0 or 0.57°.

Fig. 7 shows an alternate configuration of the die where the vacuum bar 174 is isolated from the bottom die bar 65 by a flexible metal seal 188. This configuration allows adjustment of the coating gap G₁ and convergence C without affecting the vacuum land gap G₂.

The width of the coating produced by a given die was reduced where indicated by "deckling" the die and the vacuum chamber by concurrently incorporating a) shaped plugs to reduce the widths of the die cavity manifold 154 and vacuum chamber 142 to the deckling width and b) a shim into the die that has a shim slot width corresponding to the deckling width.

### Test Procedure A

The electro-optical responses of the PDLC devices were characterized using a computer-controlled test stand consisting of an IBM personal computer interfaced with Kepco 125-1KVA-3T power supply, a Dyn-Optics Optical Monitor 590, and a Valhalla Scientific 2300 Series Digital Power Analyzer. The optics of the Dyn-Optics Optical Monitor were adjusted such that the specular transmission of photopically-filter light at an approximate 6° collection half angle was measured relative to an open beam.

A sample of a PDLC film/electrode sandwich measuring several square centimeters was attached to the leads of the power supply using a connector. A 60 Hz voltage ranging from zero to 120 volts AC (VAC) was applied to the sample in 5 VAC increments and the specular transmission recorded.

### Test Procedure B

The haze of the powered (120 VAC, 60 Hz) PDLC devices was measured using a Pacific Scientific Gardner XL-835 Colorimeter according to the manufacturer's instructions.

### Examples 1-2

Two adhesive compositions were prepared from prepolymer syrups consisting of a mixture of 90 wt.% isooctyl acrylate and 10 wt.% acrylic acid (Aldrich, Milwaukee, WI) containing 0.04 wt.% photoinitiator 2-phenyl-2,2-dimethoxy acetophenone (Esacure^{(R)} KB-1, Sartomer, West Chester, PA) as described in U.S. Pat. No. 4,330,590 (Vesley), which is incorporated herein by reference. The syrups were partially photopolymerized to viscosities of 360, and 5600 cps (as measured on a Brookfield viscometer using a #4 spindle operating at 60 rpm) by varying the exposure times.

After the syrups had been advanced to the indicated viscosities, an additional 0.1 wt.% KB-1 photoinitiator and 0.2 wt.% hexanediol diacrylate (Sartomer, West Chester, PA) were added to the syrups and the mixtures agitated until homogeneous fluids were obtained. The resulting fluids were coated on the substrates at the thicknesses indicated in Table 1 using a precision coating die as described above.

During the coating operation, the first substrate was unwound from a first unwind roll and passed over a free-wheeling, unheated steel backup roll 25.4 cm (10 inches) in diameter where a 10.2 cm (4 inch) wide strip of the prepolymer syrup, which was delivered to the precision coating die using a Zenith Pump (available from Zenith Corp.), was coated onto the first surface of the first substrate using a 10.2 cm (4 inch) die with no vacuum applied to the vacuum chamber. In Example 1 a coating die similar to that illustrated in Figure 6 was configured with a 0.51 mm (20 mil) shim, a 0° convergence, an overbite of 0.076 mm (3 mil), a coating land L₁ of 12.7 mm, a vacuum land 82 of 12.7 mm, and a die attack angle A₂ of 90°. In Example 2 a 20.3 cm (8 inch) wide strip of the prepolymer syrup was coated onto the first surface of the first substrate using a 20.3 cm (8 inch) die similar to that used for Example 1 except that it was configured with a 0.48 mm (19 mil) shim and an overbite of 0.254 mm (10 mil). The coating gap was adjusted as indicated in Table 1 along with the pump speed and web speed to produce the coatings. No vacuum was applied to the vacuum chamber during the coating operation.

After the coating was applied to the first substrate in each example, the second substrate was unwound from a second unwind roll and passed around a 2.54 cm (1 inch) diameter sintered metal laminator bar where it was laminated to the coated face of the first substrate according to the procedure described in the aforementioned Vesley et al. application. The laminator bar was located approximately 12 cm (4.7 inches) downstream from the backup roll such that the coated web was not in contact with the backup roll or other idler or takeup roll at the point of lamination, and positioned so that the uncoated first substrate was depressed approximately 3.8 mm (150 mils) below the plane defined by the first substrate as it passed between the backup roll and the idler roll; the extent of depression is hereinafter referred to as "interference." Air pressure (approximately 2.1 bar) through the sintered metal bar was adjusted to provide a cushion of air between the laminator bar and the second substrate.

The thus produced uncured laminate construction was cured to a high performance pressure sensitive adhesive by passing the construction under a bank of fluorescent black lights lamps (F20T12-350BL, available from Osram Sylvania, Danvers, MA). The laminate construction was exposed to 360 mJ/cm² of irradiation as measured with a UVIRAD radiometer (model number DR365CH3, available from Electronic Instrumentation and Technology, Inc., Sterling, VA) equipped with a glass filter responsive between 300 and 400 nm, with a maximum transmission at 365 nm. The average light intensity in the curing zone was about 2.3 mW/cm². Coating speeds were controlled by a vacuum pull roll positioned at the end of the coating line and were maintained at approximately 3.3 m/min. (11 feet/min).

Table 1 summarizes coating details for the two examples. The cured adhesive of example 2 adhered to the polyester when the laminated construction was peeled apart. Adhesive and shear properties of the cured polymer syrup of Example 2 were consistent with the properties obtained from similar formulations cured under the conditions described in U.S. Pat. No. 4,330,590.

**Table 1**

| Example | First Substrate | Second Substrate | Viscosity (cps)¹ | Coating Gap (mm) | Coating Thickness (mm) |
|---|---|---|---|---|---|
| 1 | PET² | PET² | 365 | 0.175 | 0.154±0.003 |
| 2 | Release Paper³ | PET² | 5,600 | 0.127 | 0.150±0.001 |

| | | | | | |
|---|---|---|---|---|---|
| 1. Measured on a Brookfield viscometer using a #4 spindle ' operating at 60 rpm. | | | | | |
| 2. Biaxially oriented PET film, 51 µm (2 mils) thick. | | | | | |
| 3. Polyethylene-coated paper provided with a silicone release coating. | | | | | |

### Example 3

A PDLC device was prepared from a fluid containing (a) 55 parts of a mixture consisting of 30.0 wt.% RCC-15C curable matrix mixture obtained without initiator and with 50% less thiol (W.R. Grace, Atlanta, GA), 7.5 wt.% acrylic acid, 30.0 wt.% isooctyl acrylate, 15.0 wt.% 2-phenoxyethyl acrylate (Sartomer, West Chester, PA), 15.0 wt.% divinyl ether of triethylene glycol (International Specialty Products, Wayne, NJ), and 2.5 wt.% KB-1 photoinitiator, and (b) 45 parts BL036 liquid crystal mixture (EM Industries, Hawthorne, NY) having a solution viscosity of 42 cps (measured on a Brookfield viscometer using a #3 spindle operating at 60 rpm). The fluid, which was degassed under vacuum for approximately 2 minutes at ambient temperature, was applied as a 15.2 cm (6 inch) wide strip to the electrode surface of an indium tin oxyde (ITO)-coated polyester film (90/10 indium/tin ratio, 80 ohms/square, 51 µm (2 mil) thick PET, available from Southwall Technologies, Palo Alto, CA) at a rate of approximately 152.4 cm/min (5 ft/minute) using the precision coating process described in Examples 1-2 except that a 88.9 cm die similar to that illustrated in Figure 7 was used. This die was deckled to produce a narrower coating and configured with a 152 µm shim, a coating land having a length (L₁) of 12.7 mm, a vacuum land having a length L₂ of 12.7 mm, a 0.57° convergence, a 33 µm overbite, a vacuum land gap G₂ of 0.152 mm, a die attack angle A₂ of 95°, and a coating gap of 102 µm. The convergence of the vacuum bar was 0° and no vacuum was applied to the vacuum chamber during coating. Both the die and back-up roll were temperature controlled at 21°C. A pressure of 1.7 bar was maintained to the sintered metal bar during lamination and the lamination bar was adjusted to provide an interference of 3.6 mm.

The uncured laminate construction was cured by passing the construction through a cooled curing chamber constructed of ultraviolet transparent Acrylite™ OP-4 (available from Cyro Industries, Mt. Arlington, NJ), extending approximately 61 cm (2 feet) into a cure chamber equipped with two banks of fluorescent black lights (F20T12-350BL, available from Osram Sylvania, Danvers, MA), one bank positioned on each side of the laminate. Air temperature in the cooling chamber was monitored by a thermocouple mounted in the chamber under the second fluorescent bulb and controlled at the indicated temperature by introducing temperature controlled air. Each side of the laminate construction was exposed to approximately 530 mJ/cm² of radiation calculated from light intensities of 1.1 mW/cm² as measured through the conductive electrode used in the PDLC device by means of a UVIBRITE radiometer (model number UBM365MO, available from Electronic Instrumentation and Technology, Inc., Sterling, VA) equipped with a glass filter responsive between 300 and 400 nm, with a maximum transmission at 365 nm. The radiometer was specially calibrated to read in absolute intensity.

The backup roll 50 was a pacer roll driven by a Torquer Tachometer precision motor (available from Inland Motor Division, Bradford, VA).

The cured coating thickness of the resulting PDLC film was 24±1 µm. The PDLC device had on- and off-state transmissions of 73.1% and 1.2%, respectively, and a haze of 5.8%.

### Example 4

A PDLC device was prepared as described in Example 3 except that a fluid containing (a) 57.5 parts of a mixture consisting of 13.7 wt.% lauryl methacrylate (Rhom Tech, Inc., Malden, MA), 3.9 wt.% methacrylic acid (Aldrich, Milwaukee, WI), 80.4 wt.% RCC-15C prepared without initiator (W.R. Grace, Atlanta, GA), and 2 wt.% photoinitiator Esacure KB-1, and (b) 42.5 parts of BL036 liquid crystal mixture, with a solution viscosity of 210 cps (measured on a Brookfield viscometer using a #4 spindle operating at 60 rpm), was used. The die was configured with a 152 µm shim having a slot width of 88.9 cm, a 76 µm coating gap, and a 51 µm overbite. The coating was applied as a 88.9 cm wide strip of the uncured matrix on the ITO coated PET film at a web speed of 0.91 m/minute (3 feet/minute). During coating, a 3.7 mm Hg (2 inches water) vacuum was applied to the vacuum chamber. During lamination, an interference of 3.8 mm was used. The laminate construction was exposed to 330 mJ/cm² of UV light having an average intensity of 1.7 mW/cm².

The thickness of the cured coating was 21±0.6 µm. The PDLC device had on- and off-state transmissions of 74% and 2.7%, respectively, and a haze of 4.5% .

### Example 5

A PDLC device was prepared as described in Example 4 except that the fluid contained 500 parts of BL036 liquid crystal mixture and 333 parts of a mixture having the composition of 2.5 wt.% Esacure^{(R)} KB-1 photoinitiator, 7.5 wt.% acrylic acid, 30.0 wt.% isooctyl acrylate, 15.0 wt.% 2-phenoxyethyl acrylate, 15.0 wt.% Uralac^{(R)} 3004-102 (DSM Resins, U.S., Inc., Elgin, IL), and 30.0 wt.% Uralac^{(R)} 3004-300 (DSM Resins, U.S., Inc., Elgin, IL). The die was configured with an overbite of 43 µm, a vacuum land gap G₂ of 24.5 mm and a vacuum of 1.9 mm Hg was applied to the vacuum chamber during coating. The ITO-coated polyester film used for the electrodes was approximately 130 µm (5 mils) thick. An air pressure of 3.4 bar was maintained to the laminator bar which was adjusted to provide an interference of 6.35 mm. The resulting laminate was exposed UV light having an average intensity of approximately 1.68 mW/cm² at about 23°C to produce a PDLC film approximately 18 µm thick.

The PDLC device had on- and off-state transmissions of 73.4% and 1.7%, respectively, and a haze of 5.3%.

### Example 6

A PDLC device was prepared as described in Example 4 except that a fluid containing (a) 45 parts of a mixture consisting of 2.5 wt.% Esacure^{(R)} KB-1 photoinitiator, 20.0 wt.% 9460 allyl aliphatic urethane (Monomer Polymer & Dajac, Trevose, PA), 35.0 wt.% isooctyl acrylate, 7.5 wt.% acrylic acid, 20 wt.% 2-phenoxyethyl acrylate, and 15.0 wt.% Uralac^{(R)} 3004-102, and (b) 55 parts of BL036 liquid crystal mixture, with a solution viscosity of 64 cps (measured on a Brookfield viscometer using a #3 spindle operating at 60 rpm), was used. The die was configured with a 152 µm shim having a slot width of 88.9 cm, an overbite of 30 µm and the coating applied to the ITO coated PET substrate at a rate of 3 m/min. at 20°C with a vacuum of 2.8 mm Hg applied to the vacuum chamber. An air pressure of 3.4 bar was maintained to the lamination bar which was adjusted to provide an interference of 3.8 mm. The laminate construction was exposed to 303 mJ/cm² of UV light having an average intensity of 1.6 mW/cm².

The cured coating thickness was 17.4±0.6 µm. The PDLC device had on- and off-state transmissions of 70.0% and 0.8%, respectively, and a haze of 8.6%.

### Example 7

A syrup consisting of 98 wt.% isooctyl acrylate, 2 wt.% acrylic acid, and 0.04 wt.% Esacure KB-1 was polymerized as described in U.S. Pat. No. 4,330,590' (Vesley) to a viscosity of 3,000 cps (measured on a Brookfield viscometer using a #4 spindle operating at 60 rpm). An additional 0.1 wt.% Esacure^{(R)} KB-1 and 0.2 wt.% hexanediol diacrylate was added to the partially polymerized syrup and the syrup was coated according to the procedure described in Example 1 except that a 20.3 cm (8 inch) die having a 76 µm coating gap, a 50.8 micron shim, a 76 µm overbite and a 0° convergence was used to coat a 14 cm (5.5 inch) wide, 0.051 mm thick strip of the uncured syrup onto a 0.051 mm thick biaxially oriented PET film which had previously been coated with a silicone release coating.

A second syrup having a composition of 85 wt.% isooctyl acrylate, 15 wt.% acrylic acid and 0.04 wt.% Esacure^{(R)} KB-1 was photopolymerized to a viscosity of approximately 5000 cps (measured on a Brookfield viscometer using a #4 spindle operating at 60 rpm) according to the procedure described above in preparing the first syrup. An additional 0.1 wt.% Esacure^{(R)} KB-1 and 0.2 wt.% hexanediol diacrylate was added to the partially polymerized syrup and an approximately 0.65 mm thick coating of the second syrup was notched bar-coated onto the release coated surface of a second 0.51 mm thick PET film. The two unpolymerized films were laminated together using a 2.54 mm interference setting. The resulting laminate was cured as in Example 1 to form a pressure sensitive adhesive film having a total thickness of 0.72±0.03 mm which displayed differential adhesion.

### Example 8

A PDLC device was prepared from a fluid containing (a) 45 parts of a mixture consisting of 80.4 wt.% RCC-15C curable matrix mixture obtained without initiator, 17.6 wt.% isooctyl acrylate, and 2.0 wt.% KB-1 photoinitiator, and (b) 55 parts BL036 liquid crystal mixture having a solution viscosity of 210 cps (measured on a Brookfield viscometer using a #4 spindle operating at 60 rpm). The fluid was applied as a 10.2 cm wide strip to the electrode surface of an ITO-coated polyester film at a rate of approximately 1.5 m/minute at 21°C as described in Example 1. The coating die was configured with a 152 µm shim, a 0.57° convergence, an overbite of 25.4 µm, and a coating gap of 102 µm. A vacuum of 3.7 mm Hg was applied to the vacuum chamber of the die during coating. The lamination roll was a 6.35 cm diameter idler roll which was positioned to provide an interference of 3.9 mm. The exposure during cure was 322 mJ/cm² and the average light intensity was 1.5 mW/cm².

The cured coating thickness was 20.0 µm. The PDLC device had on- and off-state transmissions of 72% and 0.2%, respectively, and a haze of 7.2%.

Other embodiments are within the following claims.

## Claims

1. A method of preparing a laminate comprising the steps of :
introducing a first substrate (12) having first and second surfaces and supported at two or more supports (16, 18, 22) into a lamination zone (L) located between two of the supports,
said first substrate (12) being unsupported throughout said lamination zone (L);
introducing a second substrate (26) having first and second surfaces into said lamination zone (L),
said second substrate (26) passing around a lamination bar (30) to position said first surfaces of said substrates (12, 26) in a facing relationship with each other,
at least one of said first surfaces being provided with a polymerizable coating; and
depressing said lamination bar to laminate said second substrate to said first substrate.

2. The method of claim 1 comprising each of said substrates with a thickness no greater than 0.64 mm (25 mils).

3. The method of claim 1 comprising providing said lamination bar in the form of a solid rod.

4. The method of claim 1 comprising said lamination bar in the form of a hollow tube.

5. The method of claim 1 comprising providing said lamination bar in the form of an air-pressurized tube adapted to create a cushion of air between said second substrate and said tube.

6. The method of claim 1 comprising providing at least one of said substrates in the form of an endless belt (62).

7. The method of claim 1 wherein said polymerizable coating is essentially solvent-free and polymerizable.

8. The method of claim 1 comprising providing said polymerizable coating in the form of a mixture of liquid crystal and polymerizable matrix reactants which upon polymerization yields a polymer dispersed liquid crystal film.

9. The method of claim 1 comprising providing said polymerizable coating in the form of reactants which upon polymerization yield a pressure sensitive adhesive.

10. The method of claim 1 comprising providing both of said first surfaces with polymerizable coating.

## Patentansprüche

1. Verfahren zum Erzeugen eines Laminats mit den Schritten:
Einführen eines ersten Substrats (12) mit ersten und zweiten Flächen, das an zwei oder mehr Halterungen (16, 18, 22) gehalten wird, in eine zwischen zwei der Halterungen angeordnete Laminierungszone (L),
wobei das erste Substrat (12) in der gesamten Laminierungszone (L) nicht gehalten ist;
Einführen eines zweiten Substrats (26) mit ersten und zweiten Flächen in die Laminierungszone (L),
wobei das zweite Substrat (26) um eine Laminierungsstange (30) geführt wird, derart, daß die ersten Flächen der Substrate (12, 26) gegenüberliegend zueinander angeordnet werden,
wobei wenigstens eine der ersten Flächen eine polymerisierbare Beschichtung aufweist; und
Niederdrücken der Laminierungsstange zum Laminieren des zweiten Substrats auf das erste Substrat.

2. Verfahren nach Anspruch 1, mit jedem der Substrate mit einer Dicke, die 0,64 mm (25 Mil) nicht übersteigt.

3. Verfahren nach Anspruch 1, mit dem Vorsehen der Laminierungsstange in Form einer festen Stange.

4. Verfahren nach Anspruch 1, mit dem Vorsehen der Laminierungsstange in Form eines hohlen Rohrs.

5. Verfahren nach Anspruch 1, mit dem Vorsehen der Laminierungsstange in Form eines Drucklufttrohrs, das geeignet ist, ein Luftkissen zwischen dem zweiten Substrat und dem Rohr zu erzeugen.

6. Verfahren nach Anspruch 1, mit dem Vorsehen wenigstens eines der beiden Substrate in Form eines Endlosriemens (62).

7. Verfahren nach Anspruch 1, wobei die polymerisierbare Beschichtung im wesentlichen frei von Lösungsmitteln und polymerisierbar ist.

8. Verfahren nach Anspruch 1, mit dem Vorsehen der polymerisierbaren Beschichtung in Form einer Mischung aus Flüssigkristallen und polymerisierbaren Matrixreaktanten, die bei der Polymerisation einen polymerdispergierten Flüssigkristallfilm bildet.

9. Verfahren nach Anspruch 1, mit dem Vorsehen der polymerisierbaren Beschichtung in Form von Reaktanten, die bei der Polymerisation ein druckempfindliches Klebemittel bilden.

10. Verfahren nach Anspruch 1, mit dem Versehen beider erster Flächen mit einer polymerisierbaren Beschichtung.

## Revendications

1. Procédé de fabrication d'un stratifié comprenant les étapes consistant à :
introduire un premier substrat (12) ayant une première et une deuxième surfaces et supporté au niveau de deux ou plus supports (16, 18, 22) en une zone de stratification (L) située entre deux des supports,
ledit premier substrat (12) n'étant pas supporté sur toute ladite zone de stratification (L) ;
introduire un deuxième substrat (26) ayant des première et deuxième surfaces dans ladite zone de stratification (L),
ledit deuxième substrat (26) passant autour d'une barre de laminage (30) pour positionner lesdites premières surfaces desdits substrats (12, 26) en relation de face à face l'une par rapport à l'autre,
au moins une desdites premières surfaces étant pourvue d'un revêtement polymérisable ; et
appuyer ladite barre de laminage afin de stratifier ledit deuxième substrat sur ledit premier substrat.

2. Procédé selon la revendication 1, dans lequel chacun desdits substrats a une épaisseur ne dépassant pas 0,64 mm (25 millièmes de pouce).

3. Procédé selon la revendication 1, comprenant le fait de prévoir ladite barre de laminage sous la forme d'une tige solide.

4. Procédé selon la revendication 1, comprenant ladite barre de laminage sous la forme d'un tube creux.

5. Procédé selon la revendication 1, comprenant le fait de prévoir ladite barre de laminage sous la forme d'un tube à air comprimé adapté pour créer un coussin d'air entre ledit deuxième substrat et ledit tube.

6. Procédé selon la revendication 1, comprenant le fait de prévoir au moins un desdits substrats sous la forme d'une bande sans fin (62).

7. Procédé selon la revendication 1, dans lequel ledit revêtement polymérisable est essentiellement exempt de solvant et polymérisable.

8. Procédé selon la revendication 1, comprenant le fait de prévoir ledit revêtement polymérisable sous la forme d'un mélange de réactifs de cristal liquide et de matrice polymérisable qui donne par polymérisation un film de cristal liquide dispersé dans un polymère.

9. Procédé selon la revendication 1, comprenant le fait de prévoir ledit revêtement polymérisable sous la forme de réactifs qui donnent par polymérisation un adhésif sensible à la pression.

10. Procédé selon la revendication 1, comprenant le fait de pourvoir les deux dites premières surfaces d'un revêtement polymérisable.
